# EUROPÄISCHE PATENTANMELDUNG

(11) **EP 1 375 045 A1**
(43) Veröffentlichungstag der Anmeldung: **02.01.2004**
(21) Anmeldenummer: 03013925.7
(22) Anmeldetag: 20.06.2003
(51) Int. Cl.: B23K 9/20

(54) **Vorrichtung und Verfahren zum Kurzzeit-Lichtbogenschweissen**

(30) Priorität: 26.06.2002 DE 10229690
(71) Anmelder: Newfrey LLC, Newark, Delaware 19711 (US)
(72) Erfinder: Willershausen, Jörg, 65187 Wiesbaden (DE)
(74) Vertreter: Haar, Lucas H., Dipl.-Ing.

(57) **Zusammenfassung**

Es werden eine Vorrichtung und ein Verfahren zum Kurzzeit-Lichtbogenschweißen von Elementen (26) auf Bauteile angegeben, mit einer Positioniereinrichtung (14), an der ein Schweißkopf (28) gehalten und relativ zum Bauteil (12) positionierbar ist, wobei der Schweißkopf (28) eine Spanneinrichtung (32) zum Halten eines Elementes (26), eine Hubeinrichtung (58) zum Zu- und Rückstellen der Spanneinrichtung (32) relativ zum Schweißkopf und einen Zuführkanal (30) zur Zuführung von zu verschweißenden Elementen (26) in die Spanneinrichtung (32) aufweist. Die Spanneinrichtung (32) weist radial bewegliche Spannelemente (34) auf, die über ein Spannmittel zwischen einer Offenstellung, die einen axialen Durchtritt eines Elementes (26) aus dem Zuführkanal (30) durch die Spanneinrichtung erlaubt, und einer Spannstellung, in der ein Element (26) zwischen den Spannelementen (34) gespannt ist, beweglich sind.

## Beschreibung

Die Erfindung betrifft eine Vorrichtung zum Kurzzeit-Lichtbogenschweißen von Elementen, insbesondere Metallbolzen, auf Bauteile, insbesondere Metallbleche, mit einer Positioniereinrichtung, an der ein Schweißkopf gehalten und relativ zu einem Bauteil positionierbar ist, wobei der Schweißkopf eine Spanneinrichtung zum Halten eines Elementes, eine Hubeinrichtung zum Zu- und Rückstellen der Spanneinrichtung relativ zum Schweißkopf und einen Zuführkanal zur Zuführung von zu verschweißenden Elementen in die Spanneinrichtung aufweist, wobei die Spanneinrichtung radial bewegliche Spannelemente aufweist, die über ein Spannmittel zwischen einer Offenstellung, die einen axialen Durchtritt eines Elementes aus dem Zuführkanal durch die Spanneinrichtung erlaubt, und eine Spannstellung, in der ein Element zwischen den Spannelementen gespannt ist, beweglich sind.

Die Erfindung betrifft ferner ein Verfahren zum Kurzzeit-Lichtbogenschweißen von Elementen, insbesondere Metallbolzen, auf Bauteile, insbesondere Metallbleche, bei dem ein zu verschweißendes Element durch einen Zuführkanal zum Bauteil zugeführt wird und mit dem Bauteil verschweißt wird.

Eine derartige Vorrichtung und ein derartiges Verfahren sind aus der DE 3 218 886 C1 bekannt. Hierbei wird der Bolzen, der mit einem Bauteil verschweißt werden soll, durch einen Zuführkanal mittels Druckluft durch eine elastisch aufspreizbare Spannzange bis zur Anlage an einem beweglichen Bolzenanschlag gefördert, der aus einem Werkstückseitig am Gerätegehäuse vor der Spannzange angeordnet ist. Durch den Bolzenanschlag wird der Bolzen lagerichtig in der Spannzange positioniert. Zum Schließen der Spannzange wird ein rohrförmiges Stellglied durch einen pneumatischen Arbeitszylinder in Richtung des Anschlages auf die Spannzange aufgeschoben, wobei miteinander korrespondierende, schräge Auflauframpen die radiale Schließbewegung erzeugen. Die Spannzange ist begrenzt motorisch axial bewegbar und drückt bei ihrer Bewegung in die Schweißposition den beweglichen Bolzenanschlag zur Seite, so daß er den Bolzen zum Anschweißen freigibt.

Als nachteilig wird bei dem bekannten Verfahren und der bekannten Vorrichtung der lange Axialhub der Spannzange und der relativ komplizierte Aufbau infolge des beweglichen Bolzenanschlags angesehen.

Im Stand der Technik wird die Schweißhubbewegung beim Kurzzeit-Lichtbogenschweißen in der Regel von einem Linearmotorantrieb ausgerührt, während die Zustellbewegung des gesamten Schweißkopfes auf das Bauteil in der Regel von einem pneumatischen Antrieb, wie einem Zylinder, übernommen wird. Nachteilig ist hierbei, daß zum einen keinerlei Regelung stattfinden kann und zum anderen, daß Leitungen für die Druckluft durch das Schlauchpaket und durch den Schweißkopf geführt werden müssen.

Der Erfindung liegt somit die Aufgabe zugrunde, eine verbesserte Vorrichtung und ein verbessertes Verfahren zum Kurzzeit-Lichtbogenschweißen von Elementen auf Bauteile zu schaffen, womit eine einfache und zuverlässige Zuführung von zu verschweißenden Elementen in eine Spanneinrichtung gewährleistet ist.

Diese Aufgabe wird bei einer Vorrichtung gemäß der eingangs genannten Art dadurch gelöst, daß die Spanneinrichtung in der Offenstellung einen sich an den Zuführkanal anschließenden, aus dem Schweißkopf heraus führenden, freien Durchgang für die zu verschweißenden Elemente bildet.

Bei der Vorrichtung nach der Erfindung wird auf einen beweglichen Bolzenanschlag und auf einen Stößel zum Einstoß eines zugeführten Elementes in eine elastische Spannzange verzichtet. Hierdurch wird der Aufbau der Vorrichtung deutlich vereinfacht und eine erhöhte Zuverlässigkeit gewährleistet. Da die Spanneinrichtung bei der Zufuhr eines Elementes in eine vollständig geöffnete Offenstellung gebracht werden kann, wird der Verschleiß der Spanneinrichtung gegenüber einer herkömmlichen, elastischen Spannzange deutlich verringert Ein weiterer Vorteil der erfindungsgemäßen Vorrichtung besteht darin, daß eine Variation der Länge, des Durchmessers und der Form von zu verschweißenden Elementen in gewissen Grenzen möglich ist, ohne daß hierzu die Spanneinrichtung ausgetauscht werden muß. Bei herkömmlichen Vorrichtungen mußte dagegen insbesondere bei Durchmesserveränderungen der zu verschweißenden Elemente jeweils eine angepaßte Spannzange eingesetzt werden. Des weiteren ist mit der erfindungsgemäßen Vorrichtung ein Verstopfen des Zuführkanals weitgehend ausgeschlossen, da kein weiterer Kanal mehr in diesen einmündet. Da schließlich die zu verschweißenden Elemente bis unmittelbar an die Bauteiloberfläche gefördert werden und erst dann gespannt werden, wird ferner erfindungsgemäß eine deutlich verbesserte Genauigkeit bei der Positionierung des zu verschweißenden Elementes in Bezug auf das Bauteil gewährleistet. Da das zu verschweißende Element beim Beginn des Schweißprozesses unmittelbar auf der Bauteiloberfläche aufliegt, ist auf diese Weise eine Nullposition unmittelbar vorgegeben, von der aus die weitere Position des Elementes während des Schweißprozesse gesteuert werden kann.

Auf einen Stützfüß, wie dieser bei herkömmlichen Kurzzeit-Lichtbogenschweißvorrichtungen notwendig ist, kann vollständig verzichtet werden. Da das zu verschweißende Element beim Beginn des Schweißvorgangs an der Bauteiloberfläche anliegt, ist auf diese Weise eine Nullinie vorgegeben, von der ausgehend der Schweißprozeß gesteuert werden kann.

In vorteilhafter Weiterbildung der Erfindung weist die Spanneinrichtung ein axial bewegliches Klemmundstück auf, das mit den Spannelementen zusammenwirkt, um diese zwischen der Offenstellung und der Spannstellung zu bewegen.

Auf diese Weise wird mit einfachen Mitteln ein mechanisches Öffnen und Schließen der Spanneinrichtung, d.h. eine Bewegung zwischen der Offenstellung und der Schließstellung ermöglicht.

Hierzu können in bevorzugter Weiterbildung der Erfindung das Klemmundstück und die Spannelemente über Schrägflächen miteinander gekoppelt sein, um eine Axialverschiebung des Klemmundstückes in eine Spannbewegung oder Lösebewegung der Spannelemente umzusetzen. Auf diese Weise wird eine besonders einfache und zuverlässige Ausführung ermöglicht.

In bevorzugter Weiterbildung der Erfindung ist das Klemmundstück zur Bewegung in die Spannstellung in Richtung auf die Spannelemente axial beweglich. Diese Ausführung hat den Vorteil, daß das Klemmundstück durch die Spannbewegung von der Oberfläche des Bauteils entfernt wird und somit ein versehentliches Anschweißen des Klemmundstückes an das Bauteil ausgeschlossen wird.

Gemäß einem weiteren Merkmal der Erfindung wirkt das Klemmundstück mit einer konusartig ausgebildeten Innenfläche auf äußere Schrägflächen an den Spannelementen. Hierzu sind die Spannelemente vorzugsweise selbstzentrierend ausgebildet. Auf diese Weise wird eine höhere Genauigkeit des Schweißprozesses infolge der Selbstzentrierung gewährleistet.

In zusätzlicher Weiterbildung der Erfindung laufen die Spannelemente etwa keilförmig in Richtung auf das Klemmundstück hin zu und sind an ihrer dem Klemmundstück abgewandten Seite durch eine Überwurfmutter beweglich gehalten. Auf diese Weise wird eine besonders einfache und zuverlässige Befestigung erreicht.

In weiterer Ausgestaltung der Erfindung ist ein Antrieb, vorzugsweise ein Linearmotor, zum Verspannen des Klemmundstückes gegen die Spannelemente vorgesehen. Auf diese Weise kann z.B. über den Verfahrweg die Klemmkraft dosiert bzw. bestimmt werden. Andererseits kann der Verfahrweg des Antriebs aus der Offenstellung bis in die Spannstellung zur Durchmessererkennung der gespannten Elemente ausgewertet werden. Schließlich können die Elemente weitgehend unabhängig von ihrer Länge gespannt werden.

In alternativer Weise kann zum Verfahren des Klemmundstückes auch ein Fluidzylinder als Antrieb vorgesehen sein. Hierdurch wird eine besonders kostengünstige Ausführung erreicht.

Zum Zu- und Rückstellen der Spanneinrichtung ist in bevorzugter Weiterbildung der Erfindung an der Hubeinrichtung ein Motorantrieb, vorzugsweise ein Linearmotor vorgesehen.

Insbesondere bei Verwendung eines Linearmotors als Antrieb für das Klemmundstück und eines weiteren Linearmotors an der Hubeinrichtung für das Zu- und Rückstellen der Spanneinrichtung läßt sich eine besonders große Variabilität beim Schweißprozeß erreichen, womit eine optimale Anpassung an unterschiedliche Schweißaufgaben ermöglicht wird. So kann z.B. die Dicke des zu verschweißenden Elementes über den Verfahrweg des Linearmotors der Spanneinrichtung erfaßt werden und beim Schweißprozeß berücksichtigt werden. Zum Erfassen des Verfahrwegs der Spannmittel der Spanneinrichtung und/oder der Hubeinrichtung kann zusätzlich eine Wegmeßeinrichtung vorgesehen sein.

In weiterer Ausgestaltung der Erfindung ist ein Drucksensor zur Kontrolle des Druckes innerhalb der Spanneinrichtung vorgesehen, dessen Signal einer Auswerteeinrichtung zur Auswertung zugeführt ist, um ein Signal auszugeben, das charakteristisch für eine Zurührung eines Elementes an die Bauteiloberfläche ist. Auf diese Weise kann bei kontinuierlicher Gaszufuhr in den Zuführkanal die Druckveränderung abgetastet werden, die sich beim Austreten eines zugeführten Elementes aus dem Zuführkanal und beim Auftreffen auf der Bauteiloberfläche ergibt, um hieraus ein Signal abzuleiten, das die Ankunft eines Elementes kennzeichnet. Auf diese Weise wird die Zuverlässigkeit des Schweißprozesses verbessert

Gemäß einer alternativen Ausführung der Erfindung wird zwischen der Spanneinrichtung und dem Bauteil eine Meßspannung angelegt, die einer Auswerteeinrichtung zur Auswertung zugeführt ist, um ein Signal auszugeben, das charakteristisch für eine Zuführung eines Elementes an die Bauteiloberfläche ist. Auch auf diese Weise kann ein Signal erhalten werden, das die Ankunft eines zu verschweißenden Elementes auf der Bauteiloberfläche anzeigt, da das Spannungssignal beim Auftreffen eines Elementes auf der Bauteiloberfläche kurzzeitig beeinflußt wird.

In zusätzlicher Weiterbildung der Erfindung ist der Zuführkanal über einen Zwischenspeicher mit einer Speichereinrichtung gekoppelt, aus der zu verschweißende Elemente zugeführt werden. Hierbei ist der Zwischenspeicher vorzugsweise in einem Abstand von höchstens einem Meter, vorzugsweise von höchstens 0,5 m, von der werkstückseitigen Mündung der Spanneinrichtung entfernt. Auf diese Weise wird gewährleistet, daß sich nicht infolge eines zu großen Abstandes zwischen der Speichereinrichtung und der Bauteiloberfläche eine zu hohe kinetische Energie eines zugeführten Elementes ergibt, die zu bleibenden Verformungen des Bauteils führen könnte.

Gemäß einer weiteren Ausgestaltung der Erfindung weist der Zwischenspeicher eine Kammer zur Aufnahme eines zu verschweißenden Elementes auf, die an beiden axialen Enden jeweils durch einen Pneumatikverschluß abgeschlossen ist. Hierbei kann in der Kammer mindestens ein Sensor zur Bolzenlängenerkennung vorgesehen sein. Ferner können gemäß einem weiteren Merkmal der Erfindung in die Kammer jeweils eine Zuführleitung zur Zuführung von Gas in die Kammer und eine Entlüftungsleitung zur Abfuhr von Gas aus der Kammer münden, die jeweils über ein Ventil steuerbar sind. Auf diese Weise läßt sich eine einfache Zufuhr und Abfuhr einzelner Elemente in den Zwischenspeicher gewährleisten. Durch die Bolzenlängenerkennung wird gewährleistet, daß nicht versehentlich Elemente mit abweichender Länge auf das Bauteil aufgeschweißt werden.

Je nach Anforderung an den Schweißprozeß kann über die Zuführleitung zur Zuführung von Gas auch Schutzgas zugeführt werden, sofern eine besonders hochwertige Schweißung erwünscht ist. Im Fall einer Schutzgasschweißung kann zusätzlich ein weiteres Mundstück vorgesehen sein, welches das Klemmundstück von außen umschließt. Auf diese Weise wird ein gewisser Hohlraum erzielt, der die Schweißstelle umgibt und der unter Schutzgaseinfluß steht.

Hinsichtlich des Verfahrens wird die Aufgabe der Erfindung durch ein Verfahren zum Kurzzeit-Lichtbogenschweißen von Elementen, insbesondere Metallbolzen, auf Bauteile, insbesondere Metallbleche gelöst, bei dem ein zu verschweißendes Element durch einen Zuführkanal bis auf eine Oberfläche des Bauteils gefördert wird, das Element gespannt wird und dann mit dem Bauteil verschweißt wird.

Da erfindungsgemäß auf diese Weise ein jeweils zu verschweißendes Element bis unmittelbar auf die Bauteiloberfläche gefördert wird, ohne daß es von der Spanneinrichtung gehindert wird, wird eine einfache und zuverlässige Zuführung der Elemente gewährleistet. Indem ein zugehöriges Element durch eine Spanneinrichtung ausgehend von einer Lage an der Bauteiloberfläche durch eine von der Bauteiloberfläche weg gerichtete Spannbewegung in der Spanneinrichtung gespannt wird, wird vermieden, daß die Spanneinrichtung versehentlich mit an die Bauteiloberfläche angeschweißt werden kann.

In zusätzlicher Weiterbildung des erfindungsgemäßen Verfahrens wird das Element durch einen in die Spanneinrichtung mündenden Zuführkanal mittels Gasdruck bis zur Bauteiloberfläche gefördert und das Element gespannt, während der Gasdruck weiter aufrechterhalten wird. Auf diese Weise ist eine einfache und sichere Zuführ gewährleistet, und ein Zurückprallen des Elementes wird durch das weitere Anstehen des Gasdrucks vermieden. Hierbei kann der Gasdruck im Bereich der Mündung des Zuführkanals in die Spanneinrichtung während eines Zuführvorgangs überwacht und ausgewertet werden, um eine Zuführung und Anlage eines zu verschweißenden Elementes an der Bauteiloberfläche zu detektieren. Alternativ kann zwischen der Spanneinrichtung und dem Bauteil eine Meßspannung angelegt werden, die ausgewertet wird, um eine Zuführung und Anlage eines zu verschweißenden Elementes an der Bauteiloberfläche zu detektieren. In vorteilhafter Weiterbildung des erfindungsgemäßen Verfahrens wird das zu verschweißende Element während des Schweißvorgangs in einer mechanisch gespannten Spannzange behandelt.

Gemäß einem weiteren Merkmal der Erfindung wird die Spannzange nach Beendigung des Spannvorgangs mit einer Prüfkraft beaufschlagt. Auf diese Weise kann unmittelbar nach Beendigung eines Schweißvorgangs sofort eine Prüfung der Festigkeit der hergestellten Schweißung durchgerührt werden.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Gesamtansicht der erfindungsgemäßen Vorrichtung in stark vereinfachter schematischer Darstellung;
- Fig.2: einen vergrößerten Längsschnitt durch einen erfindungsgemäßen Schweißkopf gemäß Fig. 1 ; und
- Fig. 3: einen vergrößerten Längsschnitt durch einen Zwischenspeicher gemäß Fig. 1.

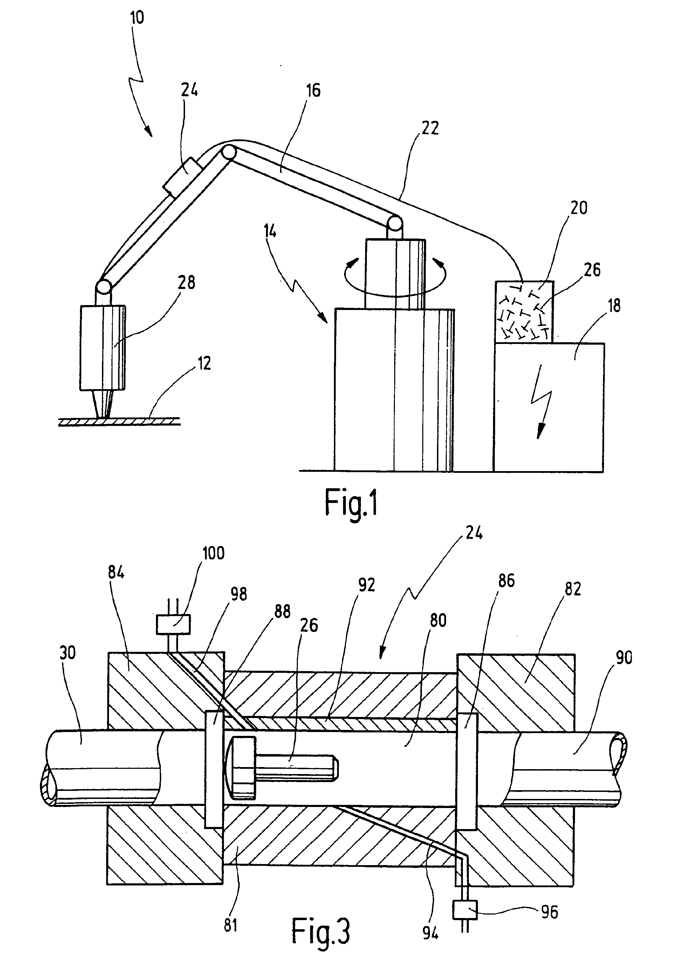

In Fig. 1 is eine erfindungsgemäße Vorrichtung zum Kurzzeit-Lichtbogenschweißen stark vereinfacht dargestellt und insgesamt mit der Ziffer 10 bezeichnet.

Die Vorrichtung 10 weist einen Schweißkopf 28 auf, der an einem Tragarm 16 einer schematisch mit der Ziffer 14 angedeuteten Positioniereinrichtung aufgenommen ist. In der Regel handelt es sich hierbei um einen Roboter, der beispielsweise einen um seine Vertikalachse verschwenkbaren Roboterarm aufweist, der zusätzlich in mehrere Schwingen aufgeteilt ist, die gelenkig miteinander gekoppelt sind. Gegebenenfalls können auch Linearführungen zur Bewegung des Roboters vorgesehen sein. Insgesamt kann der Roboter innerhalb eines vorgegebenen Bewegungsbereiches Bewegungen in allen drei Koordinatenrichtungen ausführen.

Vom Schweißkopf 28 entfernt ist eine Leistungs- und Steuereinrichtung 18 vorgesehen, über die die Schweißvorrichtung 28 mit Energie versorgt und gesteuert wird. Mit der Leistungs- und Steuereinrichtung 18 kann eine Speichereinrichtung 20 gekoppelt sein, aus der über eine geeignete Vereinzelungsvorrichtung (nicht dargestellt) darin aufgenommene zu verschweißende Elemente 26 (Bolzen) über eine Leitung 22 über einen Zwischenspeicher 24 zum Schweißkopf 28 zugeführt werden.

Ist der Schweißkopf 28 in geeigneter Weise in Bezug auf ein Bauteil 12 positioniert, so kann ein darin aufgenommenes Element durch das bekannte Kurzzeit-Lichtbogenschweißverfahren mit dem Bauteil verschweißt werden.

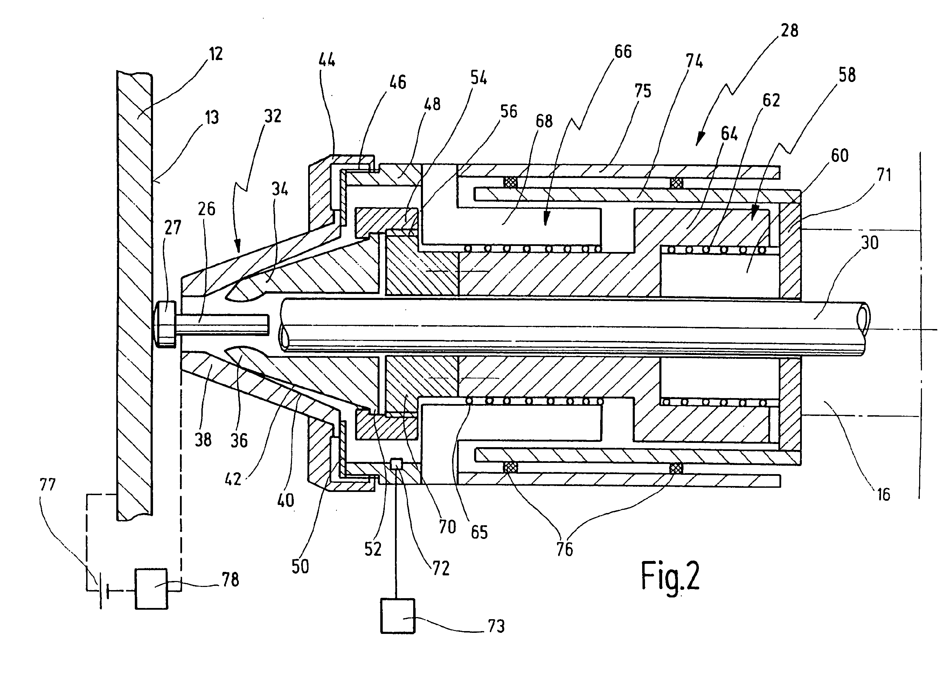

Der Schweißkopf 28 weist gemäß Fig. 2 eine Spanneinrichtung 32 zum Spannen von zu verschweißenden Elementen 26 auf, in die ein Zuführkanal 30 mündet, durch den die zu verschweißenden Elemente 26 mittels Gasdruck zugeführt werden. Die Spanneinrichtung 34 besitzt sechs etwa keilförmig in Richtung auf das Bauteil 12 zulaufende Spannelemente 34, an derem äußeren Ende jeweils ein nach innen hin vorstehender zungenartiger Vorsprung 36 vorgesehen ist. Die Spannelemente 34 sind an ihrem hinteren, den Vorsprüngen 36 gegenüberliegenden Ende an einem nach außen hervorstehenden umlaufenden Bund 52 mittels einer Überwurfmutter 54 gehalten, die in ein Gewinde 56 eines Aufnahmerings 70 eingeschraubt ist. Die Spannelemente 34 wirken mit einem Klemmundstück 38 zusammen, das eine konusförmige Innenfläche 40 aufweist, die mit den äußeren Schrägflächen 42 der Spannelemente 34 kooperieren. Da die Innenkonusfläche 40 des Klemmundstückes 38 eine größere Steigung als die Schrägflächen 42 der Spannelemente 34 aufweist, können die Spannelemente 34 durch ein axiales Verschieben des Klemmundstückes 38 in Richtung auf die Spannelemente 34 an ihren äußeren Enden oder zungenartigen Vorsprüngen 36 radial nach innen bewegt werden, während sie am inneren Ende in der Überwurfmutter 54 gehalten sind.

Ein zwischen den Spannelementen 34 aus dem Zuführkanal 30 zugeführtes Element 26 kann somit durch axiales Bewegen des Klemmundstückes 38 in einer von der Bauteiloberfläche 13 weg gerichteten Richtung gespannt werden.

Zur Bewegung des Klemmundstückes 38 ist ein Linearmotor 66 vorgesehen. Das Klemmundstück 38 ist über eine Überwurfmutter 44, die in ein Gewinde 46 eines Aufnahmerings 48 eingeschraubt ist und das Klemmundstück 38 gegen eine Scheibe 50 beaufschlagt, am Anker 68 des Linearmotors 66 festgelegt. Auf diese Weise kann das Klemmundstück 38 durch Bewegen des Ankers 68 des Linearmotors 66 in Axialrichtung vor- und zurückgefahren werden. Der Korpus des Linearmotors 66 ist einstückig mit dem Korpus oder Läufer 64 eines weiteren Linearmotors 58 ausgebildet, dessen Anker 60 an einem Basiselement 71 aufgenommen ist. Der die Wicklung 62 des Linearmotors 58 umschließende Läufer ist bis in den Linearmotor 66 hinein fortgeführt und bildet in diesem Bereich den Korpus des Linearmotors 66. Die den Korpus 64 in diesem Bereich umschließende Wicklung 65 ist vom Anker 68 des Linearmotors 66 umschlossen. Dieser kann sich somit relativ zum Korpus 64 bewegen, womit gleichzeitig das Klemmundstück 38 in Axialrichtung bewegt wird.

Die beiden Linearmotoren 58, 66 bilden gemeinsam einen doppelt wirkenden Linearmotor, der einerseits ein Spannen und Entspannen der Spanneinrichtung 34 und andererseits ein Zustellen und Rückstellen der Spanneinrichtung 34 in bezug auf die Bauteiloberfläche 13 erlaubt.

Der Aufnahmering 70, an dem die Überwurfmutter 54 festgelegt ist, ist mit dem stirnseitigen Ende des Korpus 64 verschraubt. Somit sind die Spannelemente 64 an ihrem inneren Ende am Korpus 64 beweglich festgelegt, während das Klemmundstück 38 relativ dazu mittels des Linearmotors 66 bewegt werden kann.

Zur Führung des Klemmundstückes 38 und der Spannelemente 34 ist eine Gleitlagerführung 76 mit Abstreifern vorgesehen. Diese ist zwischen einem inneren Zylinder 74, der mit dem Basiselement 71 starr verbunden ist und die beiden Linearmotoren 58, 66 von außen umschließt, und einem äußeren Zylinder 75 vorgesehen ist, der mit dem Anker 68 des Linearmotors 66 starr verbunden ist.

Der Schweißkopf 28 ist an seinem Basiselement 78 mit dem Tragarm 16 der Positioniereinrichtung 14 bzw. des Roboters verbunden. Der gesamte Schweißkopf 28 wird von dem Zuführkanal 30 in Axialrichtung durchsetzt, der sich bis in die Spanneinrichtung 32 erstreckt und ungefähr im vorderen Drittel der Längserstreckung der Spannelemente 34 oder mündet.

Somit können Elemente 26 durch den Zuführkanal 30 mittels Gasdruck durch die Spanneinrichtung 32 hindurch bis an die Bau-teiloberfläche 13 gefördert werden. In Fig. 2 ist ein derartiges Element in Form eines Bolzens dargestellt, der mit seinem Kopf 27 an der Bauteiloberfläche 13 anliegt.

Zu Beginn eines Schweißvorgangs wird der Schweißkopf 28 zunächst mittels des Tragarms 16 in Bezug auf das Bauteil 12 positioniert Hierzu kann beispielsweise der Schweißkopf 28 mit der in Offenstellung befindlichen Spanneinrichtung 32 bis an die Bauteiloberfläche 13 herangefahren werden, so daß die Stirnfläche des Klemmundstückes 38 auf der Oberfläche 13 des Bauteils 12 anliegt. Gegebenenfalls kann zusätzlich ein federbelasteter Stützfüß, der bei herkömmlichen Kurzzeit-Lichtbogenschweißsystemen bekannt ist, verwendet werden, um eine Positionierung zu unterstützen. Jedoch kann auch auf einen solchen Stützfüß vollständig verzichtet werden. Nunmehr kann ein zu verschweißendes Element 26 durch den Zuführkanal 30 mittels Gasdruck bis unmittelbar an die Bauteiloberfläche 13 zugeführt werden und sodann die Spanneinrichtung 32 gespannt werden. Dabei steht vorzugsweise der Gasdruck weiter an, um ein Zurückprallen es Elementes zu verhindern. Zum Spannen wird das Klemmundstück 38 in Richtung auf den Aufnahmering 70 verschoben, so daß sich die äußeren Zungen 36 der Spannelemente 34 nach innen bewegen und das Element 26 zwischen den zungenartigen Elementen 36 gespannt und gleichzeitig zentriert wird.

Um die Zuführung eines Elementes 26 bis auf die Bauteiloberfläche 13 zu kontrollieren, kann zwischen dem Klemmundstück 38 und dem Bauteil 12 eine Meßspannung 77 angelegt werden, die über eine Auswerteeinrichtung 78 ausgewertet wird. Befindet sich das Klemmundstück zunächst in Kontakt mit der Oberfläche 13 des Bauteils 12, so ergibt sich beim Auftreffen eines zugeführten Elementes 26 ein kurzer Impuls, der über die Auswerteeinrichtung 78 ausgewertet werden kann, um für die Leistungs- und Steuereinrichtung 18 ein Kontrollsignal zu erzeugen, daß ein Element 26 zugeführt wurde und an der Bauteiloberfläche 13 anliegt ("stud arrival signal").

Alternativ kann ein Sensor 72 vorgesehen sein, der den Gasdruck innerhalb der Spanneinrichtung 32 überwacht und die Druckveränderung erfaßt, die sich durch den Austritt eines Elementes 26 aus der Mündung des Zuführkanals 30 und den Aufprall auf der Bauteiloberfläche 13 ergibt. Das Meßsignal des Drucksensors 72 ist wiederum einer Auswerteeinrichtung 73 zugeführt, um ein "stud arrival signal" auszugeben.

Da während des Spannvorgangs das Klemmundstück 38 von der Bauteiloberfläche 13 weg bewegt wird, ergibt sich in jedem Fall ein gewisser Abstand zwischen der Mündung des Klemmundstückes 38 und der Bauteiloberfläche 13, wodurch es ausgeschlossen ist, daß das Klemmundstück 38 im Falle einer Fehlfunktion mit dem Bauteil 12 verschweißt werden kann.

Die Spannkraft der Spanneinrichtung 32 kann über den Verfahrweg des Linearmotors 66 kontrolliert werden bzw. gesteuert werden. Ferner kann durch die Überwachung des Verfahrweges des Linearmotors 66 eine Erkennung des Durchmessers der zu verschweißenden Elemente 26 erreicht werden. Da sich das zu verschweißende Element 26 in seiner Ausgangsposition unmittelbar auf der Bauteiloberfläche 13 befindet, ist für den späteren Schweißvorgang eine präzise Positionierung gewährleistet, da alle Verfahrwege ausgehend von dieser Position gesteuert werden können.

Der eigentliche Bolzen-Schweißvorgang erfolgt in an sich bekannter Weise. Dabei wird - gegebenenfalls nach Abtrennen der Meßspannung 77 - ein Pilotstrom an das Element 26 angelegt. Anschließend wird das Element 32 gegenüber dem Bauteil 12 angehoben, so daß ein Lichtbogen gezogen wird. Nachdem eine bestimmte Höhe erreicht ist, wird der eigentliche Schweißstrom zugeschaltet, durch den die Energie des Lichtbogens so erhöht wird, daß der Kopf 27 des Elements 26 und die zugeordnete Stelle des Bauteils 12 angeschmolzen werden. Im folgenden stellt der Linearmotor 58 das Element 26 wieder auf das Bauteil 12 zu. Sobald wieder der elektrische Kontakt erzielt ist, wird der Lichtbogen kurzgeschlossen und der Schweißstrom wird abgeschaltet.

Im allgemeinen erfolgt der Zustellvorgang etwas unter die Oberfläche des Bauteils 34, so daß eine gute Durchmischung der wechselseitigen Schmelzen erfolgt. Die Gesamtschmelze erstarrt und der eigentliche Schweißvorgang ist abgeschlossen. Anschließend kann gegebenenfalls im noch gespannten Zustand die Spanneinrichtung 32 durch den Linearmotor 58 mit einer Kraft in einer dem Bauteil 12 entgegengesetzten Richtung beaufschlagt werden, um die Festigkeit der hergestellten Verschweißung sogleich zu prüfen. Anschließend wird die Spanneinrichtung 32 wieder in die Offenstellung bewegt und gegebenenfalls der Schweißkopf 28 durch den Roboter an eine andere Schweißstelle bewegt, an die ein zu verschweißendes Element zugeführt werden kann.

Um zu vermeiden, daß infolge einer zu hohen kinetischen Energie eines zugeführten Elementes 26 Beschädigungen am Bauteil 12 auftreten können, sollte gewährleistet werden, daß die Länge des Zuführkanals 30 eine gewisse Maximallänge nicht überschreitet. Hierzu wird beispielsweise ein Maximalwert von 0,5 m als geeignet angesehen. In dieser Entfernung kann nunmehr ein Zwischenspeicher 24 angeordnet sein, in den einzelne Elemente 26 aus der Speichereinrichtung 20 zugeführt werden und von dieser aus dann in den Zuführkanal 30 gefördert werden.

Eine mögliche Ausführung für einen derartigen Zwischenspeicher 24 wird im folgenden anhand von Fig. 3 näher erläutert. Der Zwischenspeicher 24 weist eine Kammer 80 auf, die zur Aufnahme jeweils eines einzelnen Elementes 26 ausgebildet ist. Die Kammer 80 wird von einem zylindrischen Gehäuse 81 umschlossen, das an beiden Enden von Aufnahmebacken 82 bzw. 84 abgeschlossen ist. Der Zuführkanal 30 mündet in den Aufnahmebacken 84, während der Aufnahmebacken 82 über eine Zuführleitung 90 mit der Speichereinrichtung 20 verbunden ist, aus der über eine Vereinzelungsvorrichtung Elemente 26 zugeführt werden. Die Kammer 80 ist an beiden Enden jeweils durch einen gasdichten Verschluß 86, 88 abgeschlossen, der in dem jeweiligen Aufnahmebacken 82 bzw. 84 beweglich ist. In die Kammer 80 mündet ferner seitlich eine Zuführleitung zur Durchführung von Gas ein, die über eine Ventileinrichtung 96 gesteuert ist. Ferner mündet in die Kammer 80 seitlich ein Entlüftungskanal 98 ein, der über eine Ventileinrichtung 100 gesteuert wird.

Der Zwischenspeicher 24 funktioniert nun so, daß zunächst bei geöffnetem Verschluß 86 über die Leitung 90 bei geöffnetem Entlüftungskanal 98 ein Element 26 zugeführt wird, das auf dem Verschluß 88 auftrifft. Anschließend wird der Verschluß 86 geschlossen, die Entlüftungsleitung 98 geschlossen und über die Zuführleitung 94 Gas in die Kammer 80 gefördert, wodurch das Element 26 infolge des Gasdrucks durch den Zuführkanal 30 zum Schweißkopf 28 gefördert wird.

Zusätzlich kann, wie in Fig. 3 dargestellt, in der Wandung des Gehäuses 81 ein Sensor 92 zur Längenerkennung vorgesehen sein. Dadurch kann gewährleistet werden, daß Elemente 26 mit vorgegebener Länge in den Zuführkanal 30 gefördert werden.

Falls gewünscht, kann über die Zuführleitung 94 Schutzgas zugeführt werden, um Schutzgasschweißungen zu ermöglichen. In diesem Fall wird vorzugsweise zusätzlich ein Schutzgasmundstück verwendet, das das Klemmundstück 32 von außen umschließt und bis etwa an die Bauteiloberfläche 13 heranreicht, um so saubere Schutzgasschweißungen zu ermöglichen.

Da im Gegensatz zu herkömmlichen elastischen Spannzangen die Spanneinrichtung 32 während der Zuführung von Elementen 26 geöffnet ist und somit einen praktisch ungehinderten Durchlaß von Elementen bis auf die Bauteiloberfläche 13 erlaubt, ist der Verschleiß der Spanneinrichtung 32 gegenüber herkömmlichen Spannzangen deutlich geringer Falls notwendig, kann das Klemmundstück 38 von Zeit zu Zeit mit einem zapfenartigen Bauteil gereinigt werden, um Verunreinigungen zu entfernen.

## Patentansprüche

1. Vorrichtung zum Kurzzeit-Lichtbogenschweißen von Elementen (26), insbesondere Metallbolzen, auf Bauteile (12), insbesondere Metallbleche, mit einer Positioniereinrichtung (14), an der ein Schweißkopf (28) gehalten und relativ zu einem Bauteil (12) positionierbar ist, wobei der Schweißkopf (28) eine Spanneinrichtung (32) zum Halten eines Elementes (26), eine Hubeinrichtung (58) zum Zu- und Rückstellen der Spanneinrichtung (32) relativ zum Schweißkopf (28) und einen Zuführkanal (30) zur Zuführung von zu verschweißenden Elementen (26) in die Spanneinrichtung (32) aufweist, wobei die Spanneinrichtung (32) radial bewegliche Spannelemente (34) aufweist, die über ein angetriebenes Spannmittel (38, 44, 46, 48, 66) zwischen einer Offenstellung, die einen axialen Durchtritt eines Elementes (26) aus dem Zuführkanal (30) durch die Spanneinrichtung (32) erlaubt, und einer Spannstellung beweglich sind, in der ein Element (26) zwischen den Spannelementen (34) gespannt ist, **dadurch gekennzeichnet, daß** die Spanneinrichtung in der Offenstellung einen sich an den Zuführkanal anschließenden, aus dem Schweißkopf heraus führenden, freien Durchgang für die zu verschweißenden Elemente bildet.

2. Vorrichtung nach Anspruch 1, **dadurch gekennzeichnet, daß** die Spanneinrichtung (32) ein axial bewegliches Klemmundstück (38) aufweist, das mit den Spannelementen (34) zusammenwirkt, um diese zwischen der Offenstellung und der Spannstellung zu bewegen.

3. Vorrichtung nach Anspruch 2, **dadurch gekennzeichnet, daß** das Kiemmundstück (38) und die Spannelemente (34) über Schrägflächen (40, 42) miteinander gekoppelt sind, um eine Axialverschiebung des Klemmundstückes (38) in eine Spann- oder Lösebewegung der Spannelemente (34) umzusetzen.

4. Vorrichtung nach Anspruch 2 oder 3, **dadurch gekennzeichnet, daß** das Klemmundstück (38) zur Bewegung in die Spannstellung in Richtung auf den Zuführkanal (30) axial beweglich ist.

5. Vorrichtung nach einem der Ansprüche 2 bis 4, **dadurch gekennzeichnet, daß** das Klemmundstück (38) mit einer konusartig ausgebildeten Innenfläche (40) auf äußere Schrägflächen (42) an den Spannelementen (34) wirkt.

6. Vorrichtung nach einem der Ansprüche 2 bis 5, **dadurch gekennzeichnet, daß** die Spannelemente (34) selbstzentrierend ausgebildet sind.

7. Vorrichtung nach einem der Ansprüche 2 bis 6, **dadurch gekennzeichnet, daß** die Spannelemente (34) etwa keilförmig in Richtung auf das Klemmmundstück (38) hin zulaufen und an ihrer dem Klemmundstück (38) abgewandten Seite durch eine Überwurfmutter (54) beweglich gehalten sind.

8. Vorrichtung nach einem der vorhergehenden Ansprüche, **dadurch gekennzeichnet, daß** ein Antrieb (66), vorzugsweise ein Linearmotor, zum Verspannen des Klemmundstückes (38) gegen die Spannelemente (34) vorgesehen ist.

9. Vorrichtung nach Anspruch 8, **dadurch gekennzeichnet, daß** der Antrieb als Fluidzylinder ausgebildet ist.

10. Vorrichtung nach Anspruch 8, **dadurch gekennzeichnet, daß** an der Hubeinrichtung zum Zu- und Rückstellen der Spanneinrichtung (32) ein Motorantrieb, vorzugsweise ein Linearmotor (58) vorgesehen ist.

11. Vorrichtung nach einem der vorhergehenden Ansprüche, **dadurch gekennzeichnet, daß** ein Drucksensor (72) zur Kontrolle des Druckes innerhalb der Spanneinrichtung (32) vorgesehen ist, dessen Signal einer Auswerteeinrichtung (73) zur Auswertung zugeführt ist, um ein Signal auszugeben, das charakteristisch für eine Zuführung eines Elementes (26) an die Bauteiloberfläche (13) ist.

12. Vorrichtung nach einem der Ansprüche 1 bis 10, **dadurch gekennzeichnet, daß** zwischen der Spanneinrichtung (32) und dem Bauteil (12) eine Meßspannung (77) angelegt wird, die einer Auswerteeinrichtung (78) zur Auswertung zugeführt ist, um ein Signal auszugeben, das charakteristisch für eine Zuführung eines Elementes (26) an die Bauteiloberfläche (13) ist.

13. Vorrichtung nach einem der vorhergehenden Ansprüche, **dadurch gekennzeichnet, daß** der Zuführkanal (30) über einen Zwischenspeicher (24) mit einer Speichereinrichtung (20) gekoppelt ist, aus der zu verschweißende Elemente (26) zugeführt werden.

14. Vorrichtung nach Anspruch 13, **dadurch gekennzeichnet, daß** der Zwischenspeicher (24) einen Abstand von höchstens einem Meter, vorzugsweise von höchstens 0,5 Meter, von der werkstückseitigen Mündung der Spanneinrichtung aufweist.

15. Vorrichtung nach Anspruch 13 oder 14, **dadurch gekennzeichnet, daß** der Zwischenspeicher (24) eine Kammer (80) zur Aufnahme eines zu verschweißenden Elementes (26) aufweist, die an beiden axialen Enden jeweils durch einen Pneumatikverschluß (86, 88) abgeschlossen ist.

16. Vorrichtung nach Anspruch 15, **dadurch gekennzeichnet, daß** in der Kammer (80) mindestens ein Sensor (92) zur Bolzenlängenerkennung vorgesehen ist.

17. Vorrichtung nach Anspruch 15 oder 16, **dadurch gekennzeichnet, daß** in die Kammer (24) jeweils eine Zuführleitung (94) zur Zuführung von Gas in die Kammer (24) und eine Entlüftungsleitung (98) zur Abfuhr von Gas aus der Kammer (24) münden, die jeweils über ein Ventil (96, 100) steuerbar sind.

18. Verfahren zum Kurzzeit-Lichtbogenschweißen von Elementen (26), insbesondere Metallbolzen, auf Bauteile (12), insbesondere Metallbleche, bei dem ein zu verschweißendes Element (26) durch einen Zuführkanal (30) bis auf eine Oberfläche (13) des Bauteils (12) gefördert wird, das Element (26) nach Erreichen der Oberfläche des Bauteils (12) gespannt wird und dann mit dem Bauteil (12) verschweißt wird.

19. Verfahren nach Anspruch 18, **dadurch gekennzeichnet, daß** ein Element (26) durch eine Spanneinrichtung (32) hindurch bis auf die Bauteiloberfläche (13) gefördert und an-schließend durch eine von der Bauteiloberfläche (13) weggerichtete Spannbewegung in der Spanneinrichtung (32) gespannt wird.

20. Verfahren nach Anspruch 18 oder 19, bei dem das Element durch einen in die Spanneinrichtung (32) mündenden Zuführkanal (30) mittels Gasdruck bis zur Bauteiloberfläche (13) gefördert wird und das Element (26) gespannt wird, während der Gasdruck aufrechterhalten wird.

21. Verfahren nach Anspruch 20, bei dem der Gasdruck im Bereich der Mündung des Zuführkanals (30) in die Spanneinrichtung (32) während eines Zuführvorgangs überwacht und ausgewertet wird, um eine Zuführung und Anlage eines zu verschweißenden Elementes (26) an der Bauteiloberfläche (13) zu detektieren.

22. Verfahren nach Anspruch 21, bei dem zwischen der Spanneinrichtung (32) und dem Bauteil (12) eine Meßspannung (77) angelegt wird, die ausgewertet wird, um eine Zuführung und Anlage eines zu verschweißenden Elementes (26) an der Bauteiloberfläche (13) zu detektieren.

23. Verfahren nach einem der Ansprüche 18 bis 22, bei dem das zu verschweißende Element (26) während des Schweißvorgangs in einer mechanisch gespannten Spannzange (34, 38) gehalten wird.

24. Verfahren nach Anspruch 23, bei dem die Spannzange (34, 38) nach Beendigung des Schweißvorgangs mit einer Prüfkraft beaufschlagt wird.
